Europäisches Patentamt

(19) European Patent Office

Office européen des brevets

(11) Numéro de publication: **0 074 062**
**B1**

(12) FASCICULE DE BREVET EUROPEEN

(45) Date de publication du fascicule du brevet:
26.02.86

(51) Int. Cl.⁴: **B 65 D 90/12**, G 21 C 13/02

(21) Numéro de dépôt: **82107995.1**

(22) Date de dépôt: **31.08.82**

(54) **Dispositif de supportage d'un réservoir horizontal d'épaisseur faible par rapport à son diamètre.**

(30) Priorité: **04.09.81 FR 8116838**

(43) Date de publication de la demande:
**16.03.83 Bulletin 83/11**

(45) Mention de la délivrance du brevet:
**26.02.86 Bulletin 86/9**

(84) Etats contractants désignés:
**BE CH DE FR GB IT LI NL**

(56) Documents cités:
**DE - B - 1 165 624**
**DE - C - 568 641**
**FR - A - 2 168 674**
**GB - A - 1 179 368**

(73) Titulaire: **STEIN INDUSTRIE Société Anonyme dite:,
19-21, avenue Morane Saulnier, F-78140 Velizy
Villacoublay (FR)**
Titulaire: **ELECTRICITE DE FRANCE Service National, 2,
rue Louis Murat, F-75008 Paris (FR)**

(72) Inventeur: **Marsault, Jean-Jacques, 23, rue des Corps
Saints, F-78730 Saint-Arnoult-en-Yvelines (FR)**
Inventeur: **Semedard, Jean-Claude, 184, avenue de
Choisy, F-75013 Paris (FR)**
Inventeur: **Peyrelongue, Jean-Pierre, 2, Square Francis
Jammes, F-78760 Pontchartrain (FR)**

(74) Mandataire: **Weinmiller, Jürgen et al, Zeppelinstrasse 63,
D-8000 München 80 (DE)**

LIBER, STOCKHOLM 1986

## Description

La présente invention concerne un dispositif de supportage d'un réservoir horizontal lourd d épaisseur faible par rapport à son diamètre, à fonds bombés.

Par le document DE 1 165 624 on connaît un dispositif de supportage d' un réservoir horizontal d'épaisseur faible par rapport à son diamètre et à fonds bombes, du type émoncé dans le préambule de la revendication 1. Ce dispositif comprend sur chaque fond du réservoir, un raidisseur annulaire coaxial au fond, et un élément de tôle annulaire rigide disposé dans la même zone verticale que le raidisseur annulaire et formant berceau pour le raidisseur sur une portion de son pourtour.

Mais ce dispositif ne montre ni ne suggère la présence, à chaque fond du réservoir , d'une attache permettant une dilatation verticale et latérale, et d'un élément de tôle circulaire flexible placé entre le raidisseur et l'élément de tôle annulaire rigide pour assurer au raidisseur une protection efficace lors des variations de température.

La présente invention a pour but de permettre le supportage d'un réservoir horizontal en transmettant les efforts tangentiellement aux fonds bombés, ce qui évite les contraintes de flexion transversale ainsi que les contraintes de bridage lors de l'expansion thermique radiale.

La présente invention a pour objet un dispositif de supportage d'un réservoir horizontal lourd d'épaisseur faible par rapport à son diamètre, à fonds bombés, chacun desdits fonds du réservoir comprenant un raidisseur annulaire coaxial au fond, et un élément de tôle annulaire disposé dans la même zone verticale que le raidisseur annulaire, ledit élément de tôle annulaire étant rigide, formant berceau pour le raidisseur sur une portion de son pourtour et ayant un rayon de courbure suffisamment supérieur à celui du raidisseur pour permettre une dilatation différentielle radiale, caractérisé en ce que le raidisseur annulaire est relié à l'élément de tôle annulaire rigide par au moins une attache permettant au réservoir de se dilater librement verticalement et latéralement, en ce qu'il est prévu en outre sur chacun des fonds bombés un élément de tôle circulaire flexible entourant au moins partiellement le raidisseur, et en ce que le rayon de courbure de l'élément de tôle annulaire rigide est suffisamment supérieur à celui de l'élément de tôle circulaire flexible pour permettre une dilatation différentielle radiale.

Ce dispositif répond en outre, de préférence, à au moins l'une des caractéristiques su ivantes :

- Le réservoir étant en acier inoxydable, le raidisseur et l'élément de tôle flexible entourant le raidisseur sont sussi en acier inoxydable, et l'élément de tôle annulaire rigide formant berceau est en acier au carbone.

- L'élément de tôle annulaire rigide formant berceau est muni d'unt traverse verticale améliorant sa rigidité.

- Le raidisseur est muni d'oreilles dans lesquelles s'engagent des broches verticales solidaires de l'élément de tôle annulaire formant berceau.

Il est decrit ci-apres, à titre d'exemple et en référence aux figures du dessin annexé un dispositif de supportage selon l'inpention pour un réservoir horizontal de stockage de sodium liquide chaud pour centrale de production d'énergie à réacteur nucléaire à neutrons rapides.

La figure 1 représente le réservoir et son dispositif de supportage en élévation latérale.

La figure 2 représente le réservoir et son dispositif de supportage vus selon l'axe du réservoir, pour la moitié gauche de la gauche de la figure 1,

La figure 3 les représente vus de la droite de la figure 1.

La figure 4 représente à plus grande échelle le détail IV de la figure 1.

La figure 5 représente une vue selon la coupe V-V de la figure 1

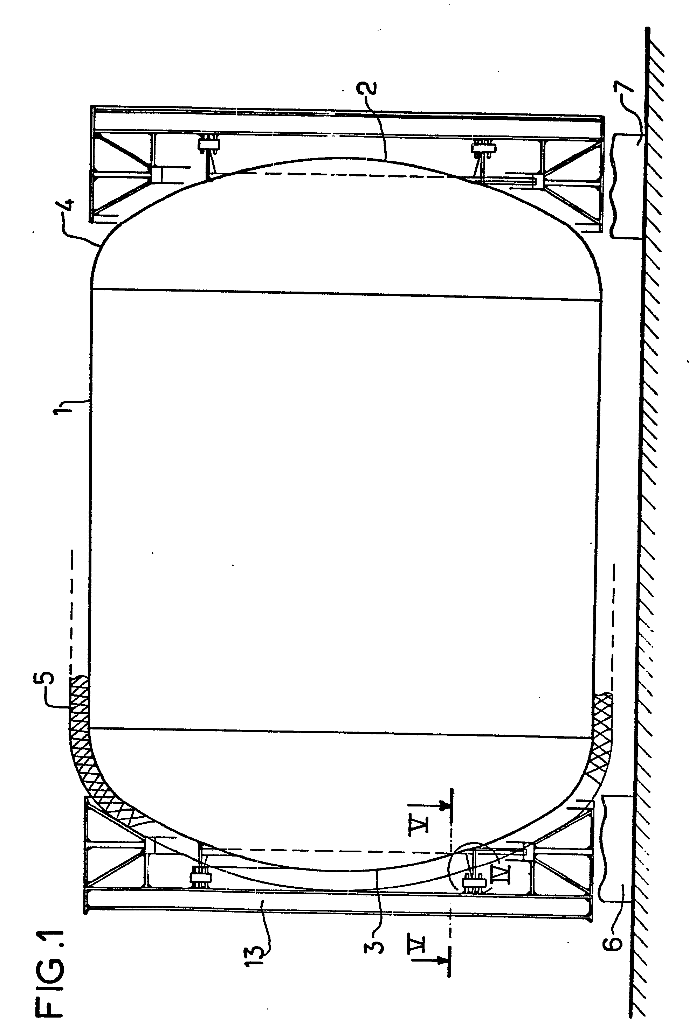

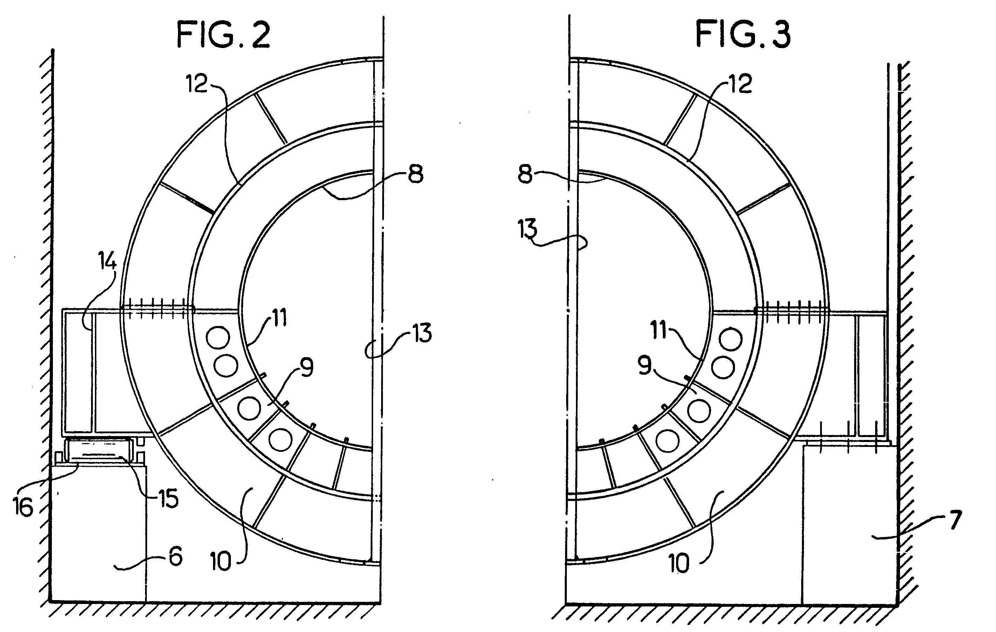

Dans les figures 1 à 3, le réservoir 1 en acier inoxydable est muni de fonds en forme de calotte sphérique 2, 3 au voisinage de son axe, une zone intermédiaire 4 étant torique. Il est entouré d'un calorifuge 5 et supporté sur des massifs de béton 6 et 7.

Chacun de ses fonds est supporté par un raidisseur annulsire 8, également en acier inoxydable, reposant sur un élément de tôle semi-circulaire flexible en acier inoxydable formant berceau 9, avec un trés faible jeu en 11. L'élément semi-circulaire flexible 9 repose lui-même sur un élément de tôle rigide en acier au carbone formant berceau 10, avec un jeu plus important, représenté en 12, sur une partie de son pourtour, le rayon de courbure de l'élément rigide étant plus important que celui de l'élément flexible pour permettre une dilatation différentielle radiale. L'angle de contact est par exemple de 60°.

L'élement rigide 10 est solidaire d'une traverse verticale 13, qui assure sa rigidification, et porte par ailleurs les broches assurant le positionnement longitudinal des éléments de supportage, qui seront décrites plus loin.

Il comporte par ailleurs des ailes de support 14 qui reposent sur les massifs de béton 6 et 7 par l'intermédiaire de galets 15 roulant sur des chemins de roulement 16, et permettant une dilatation longitudinale du réservoir. Les ailes 14 d'une des extrémités du réservoir reposent directement sur le massif de béton correspondant, en formant en ce point origine de dilatation.

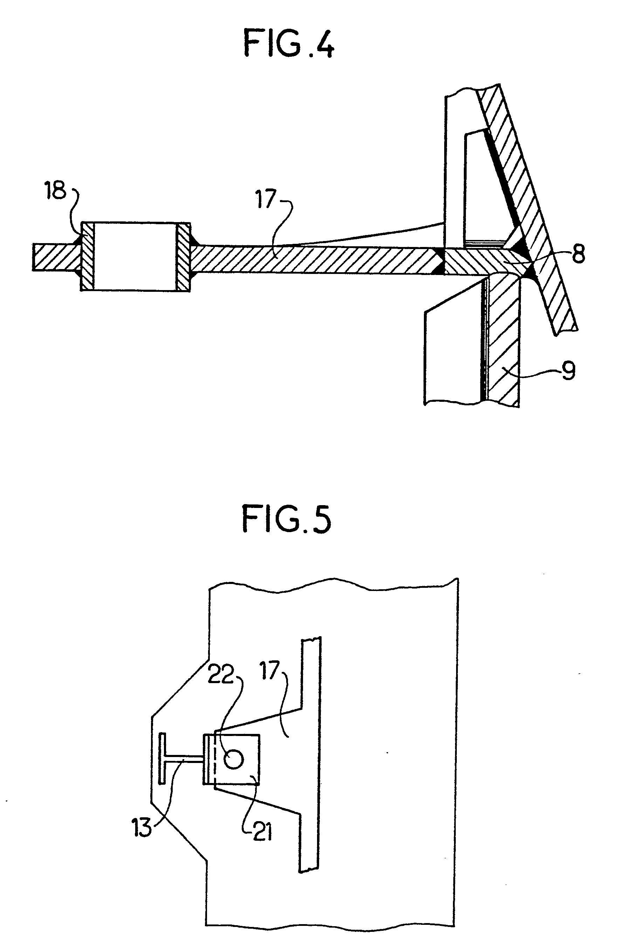

On voit sur le détail de la figure 4 une portion du raidisseur 8, reposant sur l'élément flexible 9, et sur laquelle est soudée une oreille 17 comportant prés de son extrémité une douille 18 permettant le passage d'une broche solidaire de l'élément rigice formant berceau, de façon à assurer la liaison du réservoir et de son supportage tout en permettant les dilatations différentielles.

L'un des dispositifs de liaison du raidisseur solidaire du réservoir est représenté vu de dessus à échelle agrandie dans la figure 5. On y voit l'oreille 17 solidaire du raidisseur. La traverse verticale 13 est munie de deux pattes horizontales 21 reliées par une broche verticale 22. Cette dernière s'engage dans la douille 18 de l'oreille 17 et permet de guider le berceau de supportage, tout en laissant le réservoir se dilater librement dans les sens longitudinal et vertical. Comme représenté en figure 1, chacun des raidisseurs des fonds comprend deux dispositifs de guidage disposés sur une même verticale dans le plan de symétrie vertical du réservoir, ce qui permet d'assurer le guidage latéral du réservoir par rapport à son supportsge.

Sans sortir du cadre de l'invention, certains de ses organes peuvent être remplacés par d'autres qui joueraient un rôle technique analogue.

**Revendications**

1/ Dispositif de supportage d'un réservoir horizontal lourd (1) d'épaisseur faible par rapport à son diamétre, à fonde bombés (2, 3), chacun desdits fonds du réservoir comprenant un raidisseur annulaire (8) coaxial au fond et un élément de tôle annulaire (10) disposé dans la même zone verticale que le raidisseur annulaire (8), ledit élément de tôle annulaire (10) étant rigide, formant berceau pour le raidisseur sur une portion de son pourtour et ayant un rayon de courbure suffisamment supérieur à celui du raidisseur pour permettre une dilatation différentielle radiale, caractérisé en ce que le raidisseur annulaire (8) est relié à l'élément de tôle annulaire rigide (10) par au moins une attache permettant au réservoir de se dilater librement verticalement et latéralement, en ce qu'il est prévu en outre sur chacun des fonds bombés (2, 3) un élément de tôle circulaire flexible (9) entourant au moins partiellement le raidisseur, et en ce que le rayon de courbure de l'élément de tôle annulaire rigide (10) est suffisamment supérieur à celui de l'élément de tôle circulaire flexible (9) pour permettre une dilatation différentielle radiale.

2/ Dispositif selon la revendication 1, dans lequel le réservoir est en acier inoxydable, caractérisé en ce que le raidisseur (8) et l'élémet de tôle circulaire flexible (9) sont aussi en acier inoxydable, et en ce que l'élément de tôle rigide (10) est en acier au carbone.

3/ Dispositif selon l'une des revendications 1 à 2, caractérisé en ce que l'élément de tôle annulaire rigide (10) est muni d'une traverse verticale (13) améliorant sa rigidité.

4/ Dispositif selon l'une des revendications 1 à 3, caractérisé en ce que le raidisseur (8) est muni d'oreilles (17, fig. 5) dans lesquelles s'engagent des broches verticales (22) solidaires de l'élément de tôle circulaire rigide (10).

**Patentansprüche**

1. Stützvorrichtung für einen schweren waagerechten Behälter (1), dessen Wandstärke gering in bezug auf seinen Durchmesser ist, mit gewölbten Böden (2, 3), wobei jeder der Böden des Behälters einen zum Boden koaxialen Versteifungsring (8) und ein ringförmiges Blechelement (10) aufweist, das in der gleichen senkrechtan Zone wie der Versteifungsring (8) angeordnet ist, wobei das ringförmige Blechelement (10) starr ist, über einen Teil seines Umfangs ein Lagerbett für den Versteifungsring bildet und einen Krümmungsradius aufweist, der nur so viel größer ist als der des Versteifungsrings, um eine radiale differentielle Ausdehnung zu ermöglichen, dadurch gekennzeichnet, daß der Versteifungsring (8) mit dem starren ringförmigen Blechelement (10) über mindestens eine Befestigung verbunden ist, die es dem Behälter erlaubt, sich frei senkrecht und seitlich auszudehnen, daß außerdem auf jedem der gewölbten Böden (2, 3) ein biegsames kreisförmiges Blechelement (9) vorgesehen ist, das den Versteifungsring mindestens teilweise umgibt, und daß der Krümmungsradius des starren ringförmigen Blechelements (10) ausreichend größer ist als der des biegsamen kreisförmigen Blechelements (9), um eine radiale differentielle Ausdehnung zu ermöglichen.

2. Vorrichtung nach Anspruch 1, in der der Behälter aus rostfreiem Stahl ist, dadurch gekenzeichnet, daß der Versteifungsring (8) und das biegsame kreisförmige Blechelement (9) ebenfalls aus rostfreiem Stahl sind und daß das starre Elechelement (10) aus Kahlensroffstahl ist.

3. Vorrichtung nach einem der Ansprüche 1 bis 2, dadurch gekennzeichnet, daß das starre ringförmige Blechelement (10) mit einer senkrechten Traverse (13) versehen ist, die seine Steifheit verbessert.

4. Vorrichtung nach einem der Ansspüche 1 bis 3, dadurch gekennzeichnet, daß der Versteifungsring (8) mit Ösen (17, Fig. 5) versehen ist, in die fest mit dem kreisförmigen starren Blechelement (10) verbundene Stifte (22) eingreifen.

**Claims**

1. A support device for a heavy horizontal container (1) of a wall thickness which is small with respect to its diameter, with convex bottoms (2, 3), each of said bottoms of the container comprising an annular stifferener (8) which is coaxial to the bottom, and an annular sheet-metal element (10) disposed in the same vertical zone as the annular stiffener (8), said annular sheet-metal element (10) being rigid, forming cradle for the stiffener over part of its periphery and having a radius of curvature sufficiently greater than that of the stiffener for permitting a radial diffferential expansion, characterized in that the annular stiffener (8) is connected to the annular rigid sheet-metal element (10) by at least one fastening permitting the containe; to expand freely in vertical and lateral direction, in that there is further provided on each of the convex bottoms (2, 3) a circular flexible sheet-metal element (9) surrounding at least partly the stiffener, and in that the radius of curvarure of the rigid annular sheet-metal element (10) is sufficientiv greate; than that of the flexible circular sheet-metal element (9) to permit a radial differential expansion.

2. A device according to claim 1, in which the container is made of stainless steel, characterized in that the stiffener (8) and the flexible circular sheet-metal element (9) to permit also made of stainless steel, and that the rigid sheet-metal element (10) is of carbon steel.

3. A device according to one of claims 1 to 2, characterized in that the rigid annular sheet-metal element (10) is supplied with a vertical strut (13) increasing its stiffness.

4. A device according to one of claims 1 to 3, characterized in that the stiffener (8) is supolied with lugs (17, fig. 5), into which engage vertical pins (22) which are integral with the rigid circular sheet-metal element (10).

FIG.1

0 074 062

# FIG. 2

# FIG. 3

0 074 062

# FIG.4

# FIG.5